# EUROPÄISCHE PATENTSCHRIFT

(11) **EP 4 173 492 B1**
(45) Veröffentlichungstag und Bekanntmachung des Hinweises auf die Patenterteilung: **03.04.2024**
(21) Anmeldenummer: 21205404.3
(22) Anmeldetag: 28.10.2021
(51) Int. Cl.: A23L 5/10, A22C 11/00, A22C 11/06, A22C 17/00, A23L 3/22, A23L 13/60

(54) **VORRICHTUNG UND VERFAHREN ZUM ERWÄRMEN EINES LEBENSMITTELS**
METHOD AND DEVICE FOR HEATING FOOD
DISPOSITIF ET PROCÉDÉ PERMETTANT DE CHAUFFER UNE DENRÉE ALIMENTAIRE

(43) Veröffentlichungstag der Anmeldung: 03.05.2023
(73) Patentinhaber: Albert Handtmann Maschinenfabrik GmbH & Co. KG, 88400 Biberach (DE)
(72) Erfinder: BORKUS, Peter, 63768 Hösbach (DE); BERGMANN, Martin, 63768 Hösbach (DE); EBERHARDT, Kevin, 91623 Sachsen b. Ansbach (DE)
(74) Vertreter: Grünecker Patent- und Rechtsanwälte PartG mbB

(56) Entgegenhaltungen:
- WO-A1-2014/042523
- DE-A1- 3 939 035

## Beschreibung

Die Erfindung betrifft eine Vorrichtung und ein Verfahren zum Erwärmen eines Lebensmittels, vorzugsweise zum zumindest teilweisen Garen des Lebensmittels.

Vorrichtungen zum Ohmschen Erwärmen oder Kochen von Lebensmitteln, indem ein Strom durch das elektrisch leitfähige Lebensmittel geleitet wird, sind bereits bekannt, beispielsweise aus der US 3,167,000 oder der US 4,642,847. Die WO 00/76330 A1 beschreibt eine Anlage zum kontinuierlichen Herstellen von Lebensmittelprodukten. Ein Verfahren zur Behandlung eines Lebensmittels durch Ohmsche Erwärmung geht aus der EP 3 032 956 B1 hervor. Eine Vorrichtung zur Pasteurisierung einer Lebensmittelmasse durch Anlegen eines Stroms mit einer Frequenz im Bereich 10 MHz bis 50 MHz ist offenbart in der EP 2 895 014 B1; dabei kommen konvex gekrümmte Elektroden zum Einsatz. Alternativ zu Ohmscher Erwärmung können Lebensmittel durch Zufuhr von Energie mittels Wärmeleitung oder elektromagnetischer Strahlung erwärmt werden.

Herkömmliche Vorrichtungen und Verfahren haben zwar den Vorteil, dass das Lebensmittel relativ gleichmäßig und homogen erwärmt oder gegart werden kann, ohne dass es lokal überhitzt oder verbrennt. Gleichzeitig ist die Leistungsfähigkeit herkömmlicher Vorrichtungen und Verfahren jedoch begrenzt.

Die Aufgabe der Erfindung besteht darin, eine Vorrichtung und ein Verfahren zum Erwärmen von Lebensmitteln zur Verfügung zu stellen, die im Vergleich zu herkömmlichen Vorrichtungen und Verfahren eine höhere Produktivität erlauben.

Diese Aufgabe wird gelöst durch eine Vorrichtung mit den Merkmalen des Anspruchs 1 oder durch ein Verfahren zum Erwärmen eines Lebensmittels mit den Merkmalen des Anspruchs 9. Vorteilhafte Weiterbildungen der Erfindung sind in den abhängigen Ansprüchen angegeben.

Die erfindungsgemäße Vorrichtung und das erfindungsgemäße Verfahren eignen sich besonders gut für das Erwärmen, ggf. bis hin zu einem Garen oder Kochen, von pastösen Lebensmitteln wie beispielsweise Fleischbrät oder auch Teigwaren. Bei einer Verwendung von Fleischbrät als Lebensmittel können bei der Behandlung durch die Vorrichtung oder das Verfahren der Erfindung vorgegarte oder bereits fertig gegarte Wurstwaren erzeugt werden, beispielsweise Hotdog-Würstchen oder sogenannte Wiener Würstchen.

Das in der Vorrichtung verwendete Formrohr muss nicht notwendigerweise eine Kreiszylinderform aufweisen. Es könnte zwar einen kreisrunden Innenquerschnitt aufweisen, dieser könnte jedoch auch andere Formen haben, beispielsweise oval, quadratisch, polygonal etc. Das Formrohr besteht aus einem elektrisch nicht oder fast nicht leitfähigen Material, das außerdem genügend hitzebeständig sein sollte, d.h. Temperaturen von beispielsweise 80°C, vorzugsweise 100°C oder noch weiter bevorzugt mindestens 120°C problemlos standhalten sollte. Das Formrohr sollte außerdem mechanisch genügend stark sein, um sich auch bei vergleichsweise hohen Innendrücken nicht zu verformen. Erreicht werden kann dies durch geeignete Wandstärken von beispielsweise mindestens 0,5 cm, bevorzugt mindestens 1 cm oder weiter bevorzugt mindestens 1,5 cm.

Das Formrohr kann abschnittsweise (beispielsweise als Fenster) oder insgesamt einen transparenten Werkstoff aufweisen. Dies hat den Vorteil, dass die Vorgänge im Inneren, insbesondere eine optische Änderung des Lebensmittels beim Erwärmen, visuell oder mittels eines Vision-Systems erkannt oder überwacht werden können. Zusätzlich oder alternativ zu einem transparenten Material kann das Formrohr wenigstens abschnittsweise ein Keramik-Material aufweisen. Günstig ist es, wenn das Material des Formrohrs verschleißfest ist und/oder eine Antihaftwirkung bezüglich des Lebensmittels hat.

Im Formrohr ist ein Füllschieber beweglich geführt. Dieser Füllschieber ist idealerweise so geformt, dass sein Außenquerschnitt kongruent aber etwas kleiner ist als der Innenquerschnitt des Formrohrs. Der Füllschieber kann hohl sein und auf diese Weise Teil einer Leitung zum Zuführen des Lebensmittels in einen Hohlraum sein. In dieser Form kann der Füllschieber als Füllrohr bezeichnet werden.

In der Vorrichtung sind zwei Kappen vorgesehen, zwischen denen das Lebensmittel in einem Hohlraum aufnehmbar ist, nämlich eine erste, dem Füllschieber zugeordnete Kappe und eine zweite, dem Füllschieber gegenüberliegende Kappe. Beide Kappen haben einander zugewandte, jeweils konkave Oberflächen, zwischen denen sie den Hohlraum zur Aufnahme des Lebensmittels begrenzen. Dabei bedeutet "konkave Oberfläche", dass zumindest ein Teil der dem Hohlraum zugewandten Oberfläche der jeweiligen Kappe konkav ist, wobei allerdings auch die gesamte, dem Hohlraum zugewandte Oberfläche einer Kappe konkav sein kann. Solche konkav ausgebildeten Oberflächen haben sich als günstig erwiesen hinsichtlich der späteren Form des fertig behandelten Lebensmittels und hinsichtlich des Wärmeeintrags in das Lebensmittel.

Erfindungsgemäß weist die Vorrichtung an der zweiten Kappe ein Luftventil auf. Wie aus der nachfolgenden Erläuterung hervorgehen wird, hat sich diese Maßnahme als äußerst vorteilhaft im Hinblick auf eine besonders hohe Produktivität der erfindungsgemäßen Vorrichtung erwiesen. "Luftventil" bedeutet dabei, dass Luft durch das Ventil hindurchführbar ist. "An der zweiten Kappe" bedeutet im Kontext der Erfindung, dass das Luftventil in, an oder neben der zweiten Kappe angeordnet sein kann, auf jeden Fall jedoch auf der dem Füllschieber gegenüberliegenden Seite des Hohlraums.

Bevorzugt ist über das Luftventil der zwischen den Kappen gebildete Hohlraum evakuierbar, d.h. im Hohlraum ist ein Unterdruck im Vergleich zum Normaldruck erzeugbar. Zu diesem Zweck kann die Vorrichtung über eine Vakuumquelle oder eine Vakuumpumpe verfügen oder mit einer solchen verbunden werden, um das Evakuieren über das Luftventil bewirken zu können. Die Vorrichtung kann dazu konfiguriert sein, im Hohlraum einen Unterdruck von beispielsweise 500 mbar, bevorzugt von 200 mbar oder sogar von 100 mbar oder weniger zu erzeugen. Bevor das Lebensmittel über den Füllschieber in den Hohlraum eingeführt wird, wird das Evakuieren des Hohlraums über das Luftventil zumindest teilweise, vorzugsweise jedoch bereits vollständig abgeschlossen. Dies bietet zum Einen den Vorteil, dass das Füllen des Hohlraums mit dem Lebemsmittel schneller erfolgen kann, als wenn das Lebensmittel gegen einen im Hohlraum herrschenden Normaldruck eingefüllt werden müsste. Zum Zweiten verringert sich durch den niedrigeren Gegendruck im Hohlraum der Energiebedarf für das Einfüllen, und zum Dritten wird die Gefahr einer unerwünschten Einlagerung von Luft in das Lebensmittel beim Einfüllen des Lebensmittels verringert.

Die Vorrichtung kann dazu konfiguriert sein, zwischen der ersten und der zweiten Kappe eine elektrische Spannung anzulegen, die zu einem Stromfluss durch das zwischen den Kappen befindliche Lebensmittel führt. Zu diesem Zweck sind die beiden Kappen vorzugsweise als Elektroden ausgebildet und verfügt die Vorrichtung als Heizeinrichtung über eine eigene Stromquelle oder über eine Verbindung zu einer externen Stromquelle. Die Vorrichtung kann eine Steuerung aufweisen, die dazu konfiguriert ist, die elektrische Spannung lediglich zu bestimmten Zeitpunkten bzw. über bestimmte Zeitintervalle zwischen den beiden Elektroden anzulegen. Es versteht sich, dass das Lebensmittel elektrisch leitfähig sein muss, um bei Anlegen eines Stroms erwärmt werden zu können.

Für das Material der Elektroden hat sich eine Kupferlegierung als besonders effektiv erwiesen. Optional kann zumindest die dem Hohlraum zugewandte Oberfläche der Elektroden zur Verbesserung der Leitfähigkeit und zum Korrosionsschutz mit einer Silberschicht überzogen sein; die Silber-Beschichtung hat vorzugsweise eine Stärke zwischen 5 Mikrometern und 20 Mikrometern.

Alternativ oder zusätzlich zur Ohmschen Erwärmung kann die Vorrichtung dazu konfiguriert sein, das Lebensmittel mittels elektromagnetischer Strahlung zu erwärmen oder ggf. zu garen. In dieser Ausführungsform kann als Heizeinrichtung der Vorrichtung z.B. ein Mikrowellen-Erzeuger vorgesehen sein und das im Hohlraum befindliche Lebensmittel den vom Mikrowellen-Erzeuger generierten Mikrowellen aussetzbar sein.

Zusätzlich oder alternativ kann die Vorrichtung dazu konfiguriert sein, das Lebensmittel mittels Wärmeleitung zu erwärmen. In dieser Konfiguration kann die Heizeinrichtung dazu vorgesehen sein, zunächst das Formrohr zu erwärmen, beispielsweise indem die Heizeinrichtung in das Formrohr eingebettete Heizkartuschen oder ein das Formrohr aufnehmendes, erwärmtes Flüssigkeits-Bad aufweist, bevor das Formrohr die Wärme an das im Hohlraum befindliche Lebensmittel weitergibt.

Denkbar ist es, dass über das Luftventil dem zwischen den Kappen gebildeten Hohlraum Druckluft zuführbar ist. Zu diesem Zweck kann die Vorrichtung mit einer Druckluftquelle ausgestattet oder verbindbar sein. Die Zufuhr von Druckluft in den Hohlraum kann das Ausschleusen oder Ausstoßen des fertig behandelten Lebensmittels auf der dem Luftventil gegenüberliegenden Seite unterstützen und erheblich vereinfachen oder auch zum Reinigen des Formrohrs eingesetzt werden.

Besonders bevorzugt ist eine Ausführungsform, bei der über das Luftventil sowohl der Hohlraum zwischen den Kappen evakuierbar als auch diesem Hohlraum Luft unter Normaldruck zum Belüften oder Druckluft zuführbar ist. In dieser Ausführungsform bekommt das Luftventil somit eine Doppelfunktion. Wenn wahlweise Luft unter Normaldruck oder Druckluft zuführbar sind, bekommt das Luftventil sogar eine Dreifachfunktion. Bereits ein Belüften kann den Vorteil bieten, Verformungen des Lebensmittels beim Rücksetzen des Füllschiebers zu vermeiden.

In konstruktiver Hinsicht hat es sich als günstig erwiesen, das Luftventil als Kegelventil auszubilden. Ein solches Kegelventil hält den erforderlichen Drücken stand, baut klein und kann somit bei Bedarf zumindest teilweise in das Formrohr eingebaut werden. Es ermöglicht außerdem eine präzise Ansteuerung und ein sicheres Verschließen.

Besonders einfach wird die Konstruktion der Vorrichtung, wenn das Luftventil einstückig mit der zweiten Kappe ausgebildet ist. Damit ist gemeint, dass der Ventilsitz (selbstverständlich aber nicht der relativ dazu bewegbare Ventilkörper) einstückig mit der zweiten Kappe geformt ist. Auf diese Weise verringert sich die Zahl der Bauteile der Vorrichtung.

Als zweckmäßig hat es sich erwiesen, wenn die zweite Kappe ortsfest bezüglich des Formrohrs angeordnet ist. Auf diese Weise kann die zweite Kappe besonders fest gesichert sein; sie kann insbesondere beim Ausstoßen des behandelten Lebensmittels als Gegenlager für den Ausstoß-Druck dienen.

In einer alternativen Ausführungsform ist die zweite Kappe relativ zum Formrohr beweglich gelagert. Dies erlaubt es, die zweite Kappe (die optional als zweite Elektrode ausgebildet sein kann) relativ zum Formrohr zu verlagern, um eine Öffnung des Hohlraums zu erzeugen, durch die das Lebensmittel nach seiner Erwärmung ausgestoßen werden kann.

Vorzugsweise ist der Füllschieber vollständig aus dem Formrohr herausführbar. Dadurch wird es möglich, das behandelte Lebensmittel durch dieselbe Öffnung auszuschleusen, durch die der Füllschieber in das Formrohr hineinführbar ist. Zweckmäßig ist es dabei, wenn der Füllschieber auch in einer vollständig aus dem Formrohr herausgeführten Stellung geeignet geführt oder gelagert ist, so dass er eine axiale Ausrichtung relativ zum Formrohr beibehält oder gesichert wieder einnehmen kann, um nach dem Ausschleusen des Lebensmittels vergleichsweise schnell und sicher wieder in das Formrohr eingebracht werden zu können.

In einer vorteilhaften Ausführungsform umfasst der Füllschieber ein absperrbares Einfüllventil. Dieses wird nur so lange geöffnet, wie das Lebensmittel durch den Füllschieber in den Hohlraum eingefüllt wird. Das Absperren kann sicherstellen, dass stets ein vorbestimmtes Maximalvolumen des Lebensmittels in den Hohlraum eingefüllt wird.

Denkbar ist es, dass der Füllschieber als hohles Füllrohr konfiguriert ist. Alternativ könnte der Füllschieber auch einen im Wesentlichen U-förmigen Querschnitt mit einer Einfüllnut auf seiner Außenseite aufweisen. Die Konfiguration als hohles Füllrohr hat jedoch den Vorteil, leichter absperrbar zu sein.

Die Vorrichtung kann eine Spannzange aufweisen, die beispielsweise am Formrohr montiert sein kann und in der der Füllschieber temporär fixierbar oder festklemmbar ist. Zu diesem Zweck kann die Spannzange zwei relativ zueinander bewegliche Spannbacken aufweisen. Dies bietet den Vorteil, den Füllschieber während des Erwärmens des Lebensmittels zumindest temporär relativ zum Formrohr ortsfest fixieren zu können. Dies verhindert, dass der Füllschieber durch den Innendruck des Lebensmittels zu früh nach außen bewegt wird und das Lebensmittel dabei zerstört wird.

Besonders günstig ist es, wenn die Spannzange elektrisch leitfähig ausgebildet ist. Dies ermöglicht es, beispielsweise einer am Füllschieber vorgesehenen, als Elektrode ausgebildeten ersten Kappe einen Strom zuzuleiten, wenn das Lebensmittel durch Ohmsche Erwärmung erhitzt werden soll. Die Spannzange kann der lokalen Übertragung von Strom und Wärme (Heizung in Spannbacken integriert) an die Kappe (Elektrode) des Füllschiebers dienen. Die Positionierung und das Halten des Füllschiebers kann durch einen zuschaltbaren externen mechanischen Anschlag erfolgen oder unterstützt werden.

Die Vorrichtung kann als weitere Komponente einen Auswerfer aufweisen. Dieser kann stabförmig ausgebildet sein. Der Auswerfer kann dazu dienen, das Lebensmittel aus dem Formrohr herauszuschieben, nachdem das Lebensmittel erwärmt wurde und sowohl die erste Kappe als auch die zweite Kappe aus dem Formrohr entfernt wurden. Der Auswerfer kann optional eine flexible Reinigungslippe aufweisen, um beim Auswerfen des Lebensmittels aus dem Formrohr die Innenwand des Formrohrs mechanisch zu reinigen.

Im erfindungsgemäßen Verfahren zum Erwärmen, ggf. Garen oder Kochen, eines Lebensmittels wird das Lebensmittel über einen Füllschieber in einen Hohlraum in einem Formrohr eingefüllt und dann vollständig oder zumindest lokal erwärmt. Dieses Verfahren kann durchgeführt werden mit einer Vorrichtung in einer der vorstehend beschriebenen Varianten. Erfindungsgemäß ist vorgesehen, dass der Hohlraum vor dem Einfüllen des Lebensmittels in diesen Hohlraum über ein Luftventil evakuiert wird, d.h. dass ein Unterdruck im Vergleich zum Normaldruck im Hohlraum erzeugt wird. Dies erleichtert das Einfüllen des Lebensmittels und senkt wegen des geringeren Widerstands den Energiebedarf; gleichzeitig wird ein unerwünschtes Einlagern von Luft in das Lebensmittel und ggf. eine Dampfblasenbildung verhindert oder zumindest stark verringert.

Vorzugsweise wird der Füllschieber während des Befüllens des Hohlraums mit dem Lebensmittel innerhalb des Formrohrs verschoben. Dieses Verschieben erfolgt durch einen Fülldruck des den Hohlraum füllenden Lebensmittels, d.h. durch eine Art Rückstoßeffekt. Zur Vermeidung von Stick-Slip-Effekten kann die Bewegung des Füllschiebers über ein Drosselventil eingestellt werden. Der Vorteil des Verschiebens des Füllschiebers während des Befüllens des Hohlraums liegt darin, dass der Hohlraum zunächst vergleichsweise klein gehalten und auf diese Weise schnell evakuiert werden kann, was die Produktivität erhöht.

Als zweckmäßig hat es sich erwiesen, wenn der Fülldruck des den Hohlraum füllenden Lebensmittels vergleichsweise hoch ist und mindestens 10 bar beträgt, vorzugsweise sogar mindestens 15 bar, weiter bevorzugt im Bereich von 15 bar bis 25 bar. Mit diesen Drücken kann sowohl ein schnelles Befüllen des Hohlraums als auch ein Herausschieben des Füllschiebers aus dem Formrohr bewirkt werden. In Ausführungsbeispielen ist dieses Herausschieben sogar möglich, ohne dass ein aktiver Antrieb zum Verschieben des Füllschiebers aus dem Formrohr heraus erforderlich wäre.

Vorzugsweise ist der Füllschieber vollständig aus dem Formrohr herausbewegbar, damit das Lebensmittel aus dem Formrohr ausgeschleust werden kann. Damit gibt der Füllschieber gewissermaßen die Öffnung frei, durch die das Lebensmittel nach der Erwärmung ausgeschleust werden kann.

Ein Ausschleusen oder gewissermaßen Ausstoßen des Lebensmittels aus dem Formrohr kann durch Zufuhr von Druckluft in den Hohlraum erfolgen oder zumindest unterstützt werden. Das Vermeiden mechanischer Komponenten für ein Ausschleusen oder Ausstoßen mach die Vorrichtung weniger komplex und erleichtert deren Reinigung.

Besonders günstig ist es, wenn die zum Ausschleusen verwendete Druckluft dem Hohlraum über das zum Evakuieren verwendete Luftventil zugeführt wird. Dieses erhält damit eine Doppelfunktion sowohl zum Evakuieren als auch zum Unterstützen des Ausschleusens des Lebensmittels aus dem Hohlraum.

In einer Ausführungsform kann eine Spannzange vorgesehen sein, mittels derer der Füllschieber in einer bestimmten Stellung während des Erwärmens des Lebensmittels zumindest temporär fixiert wird. Die Spannzange kann optional elektrisch leitfähig sein und auf diese Weise zum Zuführen eines elektrischen Stroms zum und durch das Lebensmittel eingesetzt werden, um dieses mittels Ohmscher Erwärmung zu erhitzen.

In einer Variante des Verfahrens wird ein beispielsweise stabförmiger Auswerfer eingesetzt, um das erwärmte Lebensmittel mechanisch aus dem Formrohr herauszuschieben. In diesem Fall ist es sinnvoll, wenn vor dem Ausschieben die beiden Kappen aus dem Formrohr entfernt werden. Der Auswerfer kann optional eine flexible Reinigungslippe aufweisen, um die Innenwände des Formrohrs beim Ausschieben des Lebensmittels mechanisch zu reinigen.

Wie bereits einleitend ausgeführt, kann es sich beim Lebensmittel beispielsweise um eine pastöse Masse oder ein sogenanntes Brät handeln, beispielsweise um einen Teig oder um ein Fleischbrät.

Die bei der Option mit dem Ohmschen Erwärmen in der erfindungsgemäßen Vorrichtung und im erfindungsgemäßen Verfahren eingesetzten elektrischen Spannungen zwischen den beiden Elektroden liegen vorzugsweise im Bereich von 150V bis 650V. Die Stromstärke während der Behandlung eines Lebensmittels erreicht Werte von z.B. 1 bis 5A; die Leistung während des Erwärmens kann bei 0,5 bis 2,5 kW liegen, bevorzugt bei 1 bis 1,5 kW. Als Dauer für die Behandlung eines Lebensmittels durch Ohmsche Erwärmung haben sich Zeiträume von beispielsweise 10s bis 45s als günstig erwiesen. Welche Werte jeweils optimal sind, hängt beispielsweise von der Art des Lebensmittels und ggf. von dessen Konsistenz und/oder Feuchtigkeitsgrad ab.

An dieser Stelle sei angemerkt, dass alle im Zusammenhang mit der Vorrichtung beschriebenen Merkmale auch für das erfindungsgemäße Verfahren und dessen Varianten gelten, ebenso umgekehrt die im Zusammenhang mit dem Verfahren beschriebenen Merkmale auch auf die Vorrichtung anwendbar sind.

Im Folgenden werden vorteilhafte Ausführungsbeispiele der Erfindung anhand einer Zeichnung näher dargestellt. Im Einzelnen zeigen:
Fig. 1 eine schematische Darstellung wichtiger Komponenten eines ersten Ausführungsbeispiels der erfindungsgemäßen Vorrichtung,
Fig. 2 das Ausführungsbeispiel von Fig. 1 in einem ersten Zustand,
Fig. 3 das Ausführungsbeispiel von Fig. 1 in einem zweiten Zustand,
Fig. 4 das Ausführungsbeispiel von Fig. 1 in einem dritten Zustand,
Fig. 5 das Ausführungsbeispiel von Fig. 1 in einem vierten Zustand,
Fig. 6 das Ausführungsbeispiel von Fig. 1 in einem fünften Zustand,
Fig. 7 das Ausführungsbeispiel von Fig. 1 in einem sechsten Zustand,
Fig. 8 das Ausführungsbeispiel von Fig. 1 in einem siebten Zustand,
Fig. 9 ein zweites Ausführungsbeispiel einer erfindungsgemäßen Vorrichtung in einem ersten Zustand,
Fig. 10 das Ausführungsbeispiel von Fig. 9 in einem zweiten Zustand und
Fig. 11 das Ausführungsbeispiel von Fig. 9 in einem dritten Zustand.

Gleiche oder einander entsprechende Komponenten sind in den Figuren durchgängig mit gleichen Bezugszeichen versehen. Die im Folgenden beschriebenen Komponenten der Vorrichtung und Parameter beim Betrieb der Vorrichtung ermöglichen zwar gemeinsam die höchste Steigerung bei der Produktivität, können jedoch auch schon einzeln oder in beliebigen Unterkombinationen eigenständige Erfindungen darstellen.

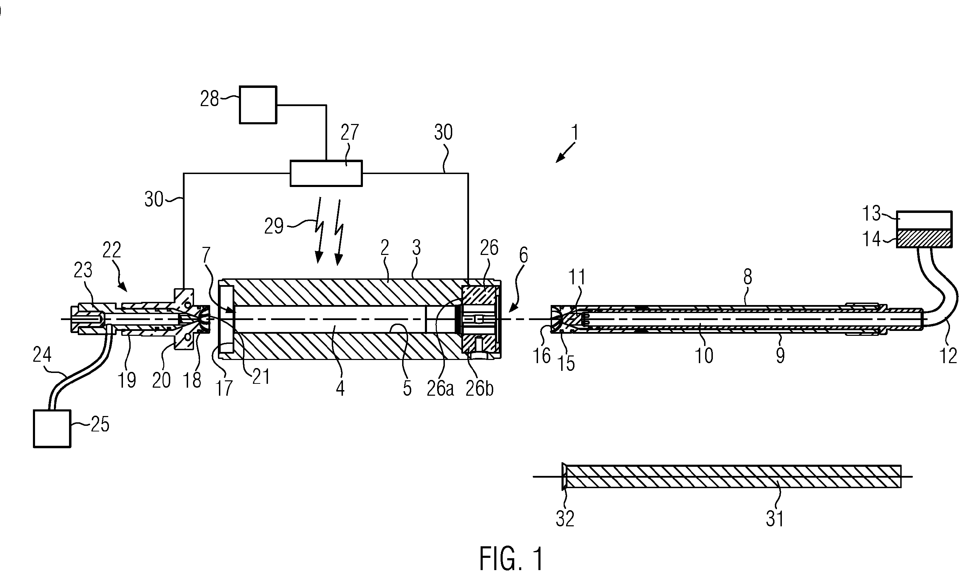

Fig. 1 zeigt in vereinfachter schematischer Darstellung einzelne Komponenten verschiedener Ausführungsbeispiele einer erfindungsgemäßen Vorrichtung 1 zum Erwärmen eines Lebensmittels. Die Vorrichtung 1 umfasst ein Formrohr 2. Dieses kann eine im Wesentlichen zylindrische äußere Oberfläche 3 aufweisen und aus einem elektrisch nicht leitfähigen Material bestehen, insbesondere vollständig oder zumindest abschnittsweise aus einem transparenten Material wie beispielsweise Plexiglas. Denkbar ist auch eine Ausbildung des Formrohrs 2 aus Keramik. Das Formrohr 2 weist einen Innenraum 4 auf, der von einer Innenwand 5 begrenzt ist. Im vorliegenden Ausführungsbeispiel ist ein zentraler Abschnitt des Innenraums 4 ebenfalls zylinderförmig, aber der Innenraum 4 kann auch beliebige andere Querschnittsformen aufweisen. Im vorliegenden Ausführungsbeispiel kann der Innenraum 4 einen Durchmesser von beispielsweise 0,5cm bis 4cm aufweisen, aber auch größere Werte sind denkbar. Der Innenraum 4 verfügt an seinen Enden über eine erste Öffnung 6 bzw. eine zweite Öffnung 7.

Ein Füllschieber 8 ist relativ zum Formrohr 2 beweglich und dazu vorgesehen, zumindest abschnittsweise in den Innenraum 4 des Formrohrs 2 eingeführt zu werden. Vorzugsweise ist eine Außenkontur des Füllschiebers 8 kongruent zum Querschnitt des Innenraums 4 des Formrohrs ausgebildet, jedoch minimal kleiner dimensioniert als der Querschnitt des Innenraums 4, um den Innenraum 4 an der ersten Öffnung 6 abzudichten, sich aber dennoch vergleichsweise leicht im Innenraum 4 bewegen zu lassen. Im vorliegenden Ausführungsbeispiel kann die Außenkontur 9 des Füllschiebers 8 folglich kreisförmig sein.

Im vorliegenden Ausführungsbeispiel ist der Füllschieber 8 als Füllrohr ausgebildet, d.h. mit einer Leitung 10 in seinem Inneren, die an einem distalen (in Fig. 1: linken) Ende von einem hier beispielshaft als Kegelventil ausgebildeten Füllventil 11 abgeschlossen wird. Über eine schematisch angedeutete, beispielsweise flexible Zuleitung 12 ist der Füllschieber 8 in Verbindung mit einem Reservoir 13, in dem das zu erwärmende Lebensmittel 14 aufgenommen ist. Das Lebensmittel 14 kann pastös sein, beispielsweise ein Teig oder Fleischbrät. Über ein geeignetes Fördermittel wie beispielsweise eine Pumpe (nicht dargestellt) kann das Lebensmittel 14 über die Zuleitung zum Füllschieber 8 geleitet werden.

An seinem distalen Ende (in Fig. 1: links) weist der Füllschieber 8 eine erste Kappe 15 auf. Die Kappe 15 weist eine dem Innenraum 4 zugewandte, konkave Oberfläche 16 auf. Etwa im Zentrum der konkaven Oberfläche 16 befindet sich die Öffnung des Füllventils 11.

Im Bereich der zweiten Öffnung 7 weist das Formrohr 2 eine Stufe 17 auf. In die Stufe 17 ist eine zweite Kappe 18 mit einem Kappenkörper 19 einsetzbar. Der Kappenkörper 19 umfasst einen Flansch 20, der in die Stufe 17 einsetzbar ist. Die zweite Kappe 18 weist eine konkave Oberfläche 21 auf, die dem Innenraum 4 des Formrohrs 2 bzw. der konkaven Oberfläche 16 des Füllschiebers 8 zugewandt ist.

Ein Luftventil 22 an der zweiten Kappe 18 ausbildend, ist im Kappenkörper 19 ein Ventilelement 23 beweglich gelagert. Im vorliegenden Ausführungsbeispiel ist das Luftventil 22 als Kegelventil ausgebildet, dessen Öffnung sich etwa im Zentrum der konkaven Oberfläche 21 der zweiten Kappe 18 befindet. Eine Luftleitung 24 verbindet das Luftventil 22 mit einer Vakuumquelle 25, beispielsweise einer Vakuumpumpe.

Im Bereich der ersten Öffnung 6 ist im Formrohr 2 eine Spannzange 26 angeordnet. Die Spannzange 26 weist zwei Spannbacken 26a, 26b auf, die relativ zueinander zwischen einer geöffneten Stellung einer Klemmstellung bewegbar sind. In der geöffneten Stellung ist der Abstand zwischen den Spannbacken 26a, 26b groß genug, um den Füllschieber 8 dazwischen passieren zu lassen.

Als weitere Komponente weist die Vorrichtung 1 eine Heizeinrichtung 27 auf, die mit einer Steuerung 28 der Vorrichtung 1 verbunden sein kann. Die Heizeinrichtung 27 dient dazu, Energie zum Erwärmen eines im Formrohr 2 befindlichen Lebensmittels 14 zur Verfügung zu stellen. Dazu kann die Heizeinrichtung 27 auf unterschiedliche Art und Weise konfiguriert sein. Beispielsweise kann sie ein Mikrowellen-Erzeuger sein, der Mikrowellenstrahlung 29 erzeugt und auf das im Formrohr 2 befindliche Lebensmittel 14 richtet. Alternativ kann die Heizeinrichtung ein Flüssigkeitsbad sein oder umfassen, in welches das Formrohr 2 zur Aufnahme von Wärme eingebettet ist, und/oder die Heizeinrichtung 27 kann elektrische Widerstandsheizelemente umfassen, die am Formrohr 2 anliegen oder in die Wand des Formrohrs 2 eingebettet sein können. In einer weiteren Ausführungsform kann die Heizeinrichtung 27 eine Stromquelle aufweisen oder umfassen und - wie nachfolgend im Detail erläutert - zur Ohmschen Erwärmung eines im Formrohr 2 befindlichen Lebensmittels konfiguriert sein. In dieser Ausführungsform sind die erste Kappe 15 und die zweite Kappe 18 jeweils als erste bzw. zweite Elektroden ausgebildet, d.h. aus elektrisch leitfähigem Material. Optional kann die konkave Oberfläche 16, 21 der ersten und zweiten Elektroden 15, 18 mit einer Beschichtung beispielsweise aus Silber versehen sein. In diesem Ausführungsbeispiel sind vorzugsweise auch die Spannzange 26 und der Füllschieber 8 elektrisch leitfähig bzw. aus einem elektrisch leitfähigen Material ausgebildet, und Stromleitungen 30 führen von der Heizeinrichtung 27 zur zweiten Kappe 18 bzw. zur Spannzange 26.

Als weitere Komponente verfügt die Vorrichtung über einen im Wesentlichen stabförmigen Auswerfer 31. Dieser umfasst eine aus flexiblem Material ausgebildete, ringförmige Reinigungslippe 32. Die Reinigungslippe 32 ist so dimensioniert, dass sie ein mechanisches Reinigen der Innenwand 5 des Innenraums 4 des Formrohrs 2 ermöglicht, wenn der Auswerfer 31 von rechts nach links durch den Innenraum 4 geschoben wird.

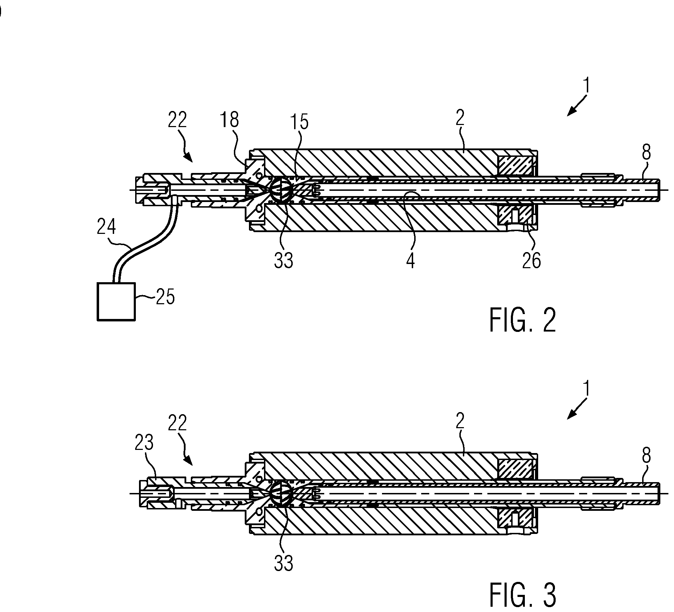

In Fig. 2 sind der Übersichtlichkeit halber einige Komponenten der Vorrichtung 1 nicht mehr dargestellt. Die Vorrichtung 1 befindet sich in einem ersten Zustand. Der Füllschieber 8 ist so weit wie möglich in den Innenraum 4 des Formrohrs 2 hineingeführt. Die Spannzange 26 befindet sich in ihrer geöffneten Stellung. Die zweite Kappe 18 ist an der zweiten Öffnung 7 des Formrohrs 2 in die Stufe 17 eingesetzt. Die erste und die zweite Kappe 15, 18 berühren einander oder haben lediglich einen minimalen Abstand voneinander. Die konkaven Oberflächen 16, 21 der beiden Kappen 15, 18 bilden zwischen den beiden Kappen 15, 18 einen Hohlraum 33.

Das Luftventil 22 befindet sich in seiner geöffneten Stellung, in der das Ventilelement 23 nach links zurückgezogen ist. Über die Luftleitung 24 sorgt die Vakuumquelle 25 dafür, dass der Hohlraum 33 über das Luftventil 22 evakuiert wird. Dabei kann der Luftdruck im Hohlraum 33 auf einen Wert von unter 500 mbar, bevorzugt von unter 200 mbar oder sogar von unter 100 mbar abgesenkt werden.

Fig. 3 zeigt die Vorrichtung 1 in einem zweiten Zustand. Ausgehend von dem in Fig. 2 gezeigten ersten Zustand ist das Luftventil 22 geschlossen worden, indem das Ventilelement 23 des als Kegelventil ausgebildeten Luftventils 22 nach rechts in seinen Ventilsitz hinein bewegt wurde. Damit ist das Evakuieren des Hohlraums 33 abgeschlossen. Das bietet den Vorteil, dass dem nachfolgenden Befüllen des Hohlraums 33 mit einem Lebensmittel 14 ein erheblich geringerer Widerstand entgegenwirkt; zudem verringert sich die Gefahr, dass im Hohlraum 33 enthaltene Luft beim Befüllen des Hohlraums in das Lebensmittel 14 eingelagert wird und dort unerwünschte Blasen bildet, die ggf. beim Erwärmen oder Garen des Lebensmittels aufplatzen und das Lebensmittel zerstören könnten.

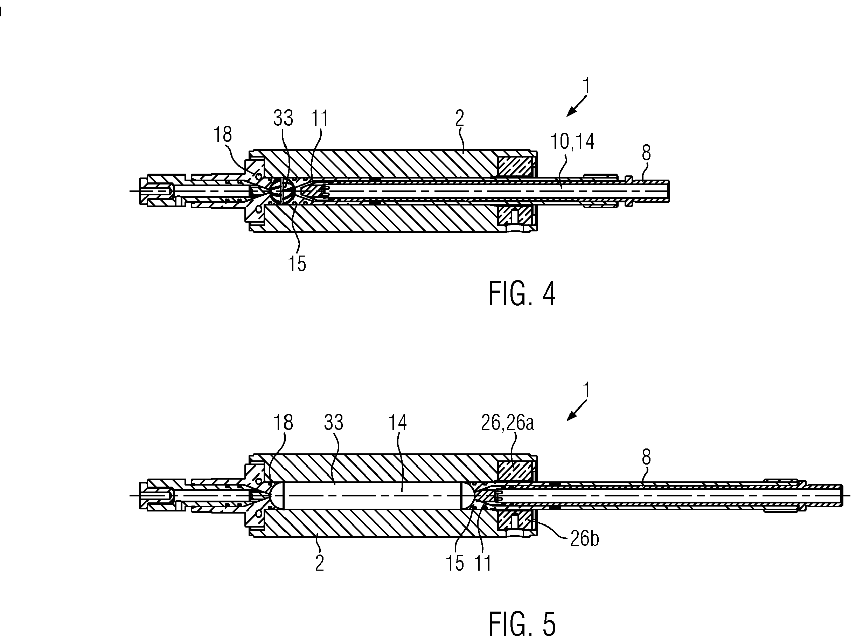

Fig. 4 zeigt die Vorrichtung 1 in einem dritten Zustand, nämlich bei Beginn des Befüllens des Hohlraums 33 mit einem Lebensmittel. In diesem Zustand ist das Füllventil 11 geöffnet. Über die Zuleitung 12 wird das (in der Regel pastöse) Lebensmittel 14 vom Reservoir 13 zum Füllschieber 8 geführt. Durch die Leitung 10 im Inneren des Füllschiebers 8 und über das Füllventil 11 wird das Lebensmittel 14 unter recht hohem Druck von beispielsweise 10 bar bis 25 bar in den Hohlraum 33 eingefüllt. Der Innendruck des Lebensmittels 14 innerhalb des Hohlraums 33 wirkt dabei als Antrieb für den Füllschieber 8, der den Füllschieber 8 nach rechts bewegt, da die erste Kappe 18 fester als der Füllschieber 8 relativ zum Formrohr 2 fixiert ist. In Fig. 4 ist zu erkennen, dass sich bereits ein (kleiner) Abstand zwischen der ersten Kappe 15 und der zweiten Kappe 18 gebildet hat. Selbstverständlich ist der Hohlraum 33 ab dem Beginn des Befüllens mit einem Lebensmittel 14 nicht mehr leer; er kann sogar (und wird in der Regel) vollständig von dem Lebensmittel 14 ausgefüllt sein. Aus Gründen der Konsistenz wird dennoch auch bei einem vollständig oder teilweise gefüllten Raum zwischen den beiden Kappen 15, 18 im Sinne der Erfindung vom "*Hohlraum"* 33 gesprochen.

Fig. 5 zeigt die Vorrichtung 1 in einem vierten Zustand, in welchem das Befüllen des Hohlraums 33 mit dem Lebensmittel 14 abgeschlossen ist. Der gesamte Raum zwischen der ersten Kappe 15 und der zweiten Kappe 18 ist vom Lebensmittel 14 ausgefüllt. Das Füllventil 11 am Füllschieber 8 ist abgesperrt. Die Spannbacken 26a, 26b der Spannzange 26 sind in die geschlossene Stellung gebracht, in der sie zwischen sich den Füllschieber 8 einklemmen und diesen somit ortsfest relativ zum Formrohr 2 fixieren.

In diesem Zustand kann das Erwärmen des Lebensmittels 14 durchgeführt werden. Wie vorstehend erläutert, dient die Heizeinrichtung 27 zum Zuführen von Wärme zu der im Hohlraum 33 enthaltenen Portion des Lebensmittels 14. Dies kann mittels Wärmeleitung über das Formrohr 2 erfolgen, durch Zuführen von elektromagnetischer Strahlung, beispielsweise von Mikrowellenstrahlung 29, oder aber durch Ohmsche Erwärmung, indem über die Spannzange 26 und den elektrisch leitfähigen Füllschieber 8 eine elektrische Spannung zwischen den als Elektroden ausgebildeten ersten und zweiten Kappen 15, 18 angelegt wird. Durch das ebenfalls elektrisch leitfähige Lebensmittel 14 fließt ein Strom, der durch den elektrischen Widerstand des Lebensmittels 14 in Wärme umgesetzt wird, die das Lebensmittel 14 zumindest lokal, vorzugsweise vollständig und homogen erwärmt. Unter "Erwärmen" ist zu verstehen, dass die Temperatur des Lebensmittels steigt, beispielsweise um mindestens 5°C, wobei optional das Lebensmittel 14 auch gegart werden kann. Die elektrische Spannung zwischen den beiden als Elektroden ausgebildeten Kappen 15, 18 kann beispielsweise zwischen 150V und 650V betragen und für eine Dauer von beispielsweise 5s bis 45s angelegt werden.

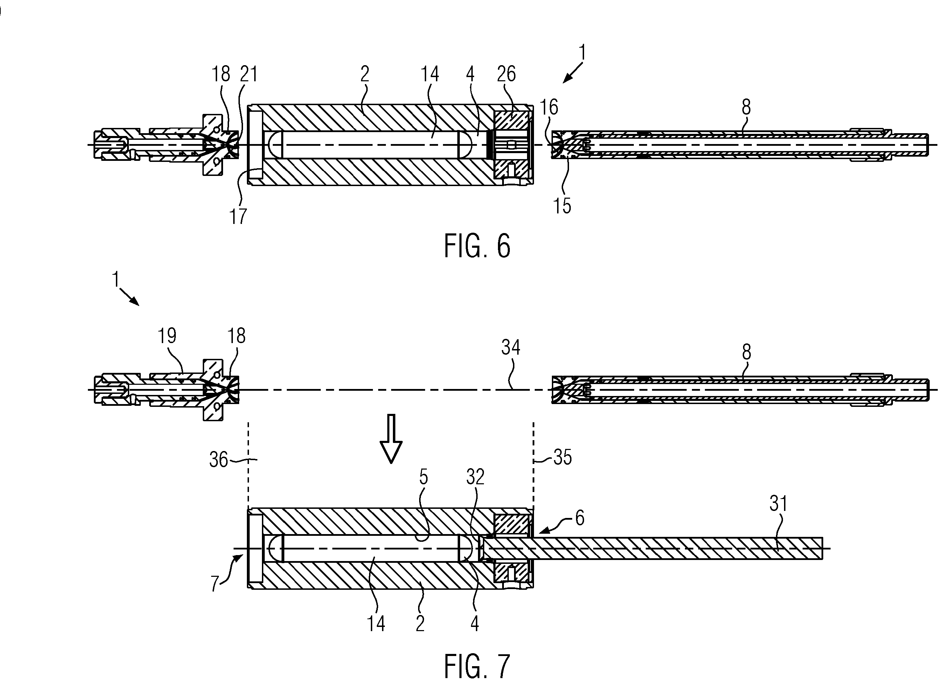

Fig. 6 zeigt die Vorrichtung in einem fünften Zustand. Ausgehend von dem in Fig. 5 gezeigten Zustand ist die Spannzange 26 in ihre geöffnete Stellung gebracht worden. Der Füllschieber 8 ist nach rechts bewegt und vollständig aus dem Formrohr 2 entfernt worden. Die Baugruppe mit der zweiten Kappe 18 ist ebenfalls aus der Stufe 17 herausbewegt und vollständig vom Formrohr 2 entfernt worden. Das erwärmte Lebensmittel 14 befindet sich weiterhin im Innenraum 4 des Formrohrs 2. Die Form der Enden des Lebensmittels 14 sind durch die konkaven Oberflächen 16, 21 der Kappen 15, 18 vorgegeben bzw. entsprechend der Form dieser Oberflächen 16, 21.

Fig. 7 zeigt die Vorrichtung 1 in einem sechsten Zustand. Nachdem der Füllschieber 8 und die Baugruppe mit der zweiten Kappe 18 aus dem Formrohr 2 entfernt wurden, ist das Formrohr 2 aus der Flucht 34 von Füllschieber 8 und zweiter Kappe 18 heraus bewegt worden. Eine Möglichkeit dazu besteht darin, dass das Formrohr 2 in einer Führung 35 gelagert ist und entlang der Führung relativ zum Füllschieber 8 versetzt wird. Eine andere Möglichkeit besteht darin, dass das Formrohr 2 (oder auch eine Mehrzahl von solchen Formrohren 2) auf einem Träger 36 angeordnet ist, beispielsweise einer rotierbaren Trommel 36, und mittels dieser aus der Flucht 34 entfernt wurde. Eine weitere Möglichkeit besteht darin, dass der Formschieber 8 und die Baugruppe mit der zweiten Kappe 18 bewegt werden, während das Formrohr 2 ortsfest bleibt.

Der Innenraum 4 des Formrohrs 2 fluchtet nun mit dem Auswerfer 31. Dieser ist durch die erste Öffnung 6 in das Innere des Formrohrs 2 eingeführt. Beim Bewegen des Auswerfers 31 nach links streicht die Reinigungslippe 32 an der Innenwand 5 des Innenraums 4 entlang und reinigt auf diese Weise die Innenwand 5. Die zweite Öffnung 7 ist frei bzw. offen.

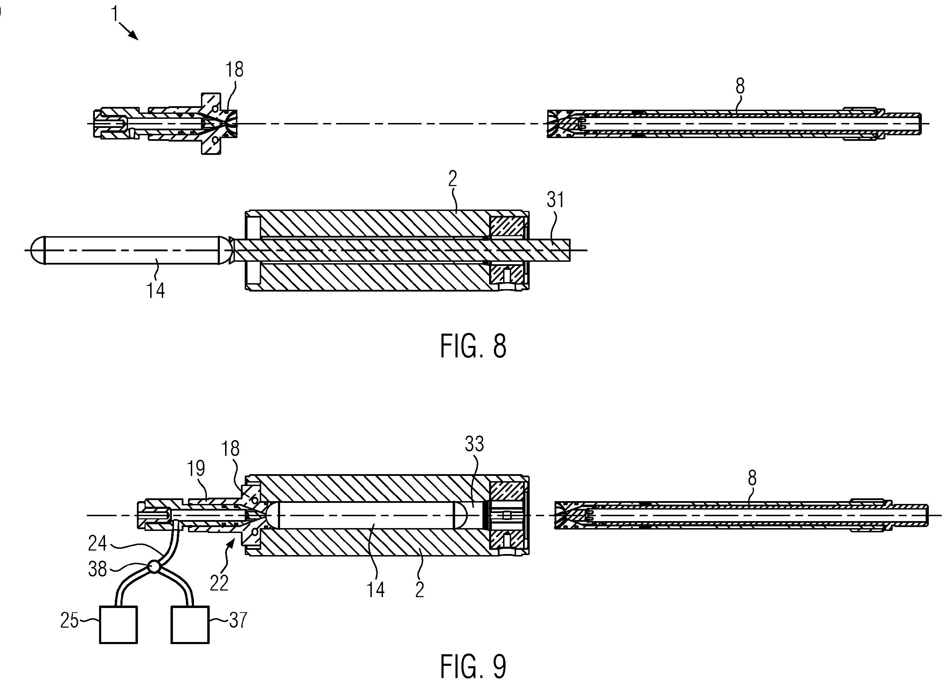

Fig. 8 zeigt die Vorrichtung 1 in einem siebten Zustand. Ausgehend von dem Zustand in Fig. 7 ist der Auswerfer 31 so weit durch den Innenraum 4 des Formrohrs 2 hindurchbewegt worden, dass die Reinigungslippe 32 am distalen Ende des Auswerfers 31 aus der zweiten Öffnung 7 des Formrohrs 2 herausgetreten ist. Auf diese Weise wird das erwärmte (oder gegarte) Lebensmittel 14 aus dem Formrohr 2 ausgestoßen bzw. ausgeschleust. Im Ergebnis erzeugen die Vorrichtung 1 bzw. das Verfahren ein erwärmtes, vorgegartes oder sogar gegartes Lebensmittel wie eine Wurst, bspw. eine Hotdog-Wurst, oder eine aus Teig (vor-)gebackene Stange.

Im Anschluss an das Ausschleusen des Lebensmittels 14 kann die Vorrichtung 1 wieder in den in Fig. 2 gezeigten ersten Zustand zurückkehren; der Zyklus beginnt von Neuem.

Fig. 9 zeigt ein weiteres Ausführungsbeispiel einer erfindungsgemäßen Vorrichtung 1. Im Unterschied zum ersten Ausführungsbeispiel ist der Kappenkörper 19 mit der zweiten Kappe 18 hier ortsfest relativ zum Formrohr 2. Der Kappenkörper 19 kann dazu fest am Formrohr 2 montiert sein.

Als weiterer Unterschied ist das Luftventil 22 über die Luftleitung 24 nicht nur mit einer Vakuumquelle 25 verbindbar, sondern selektiv auch mit einer Druckluftquelle 37. Statt der Druckluftquelle 37 kann Element 37 einfach eine Verbindung zur Umgebungsluft (Normaldruck) sein. Ein Wegeventil 38 ist von der Steuerung 28 ansteuerbar und sorgt dafür, dass das Luftventil 22 stets nur entweder mit der Vakuumquelle 25 oder mit der Druckluftquelle 37 fluidverbunden ist.

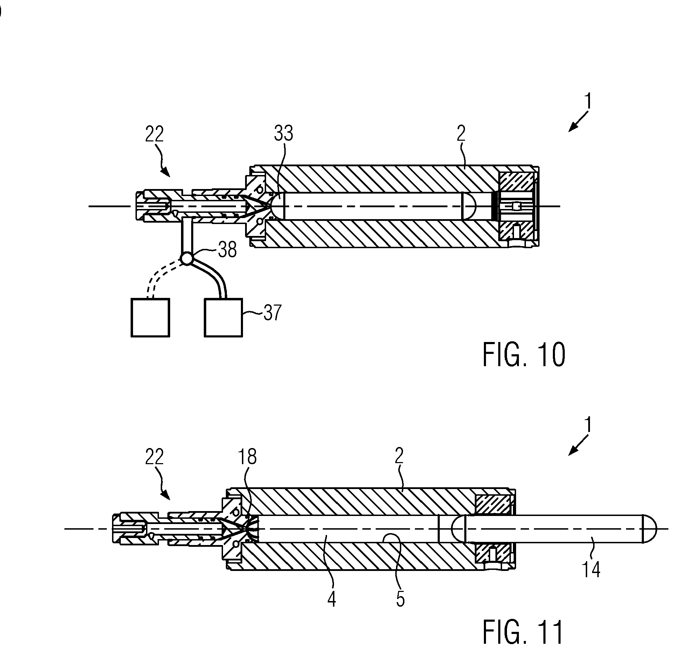

Das Einfüllen und Erwärmen des Lebensmittels 14 erfolgt analog zum ersten Ausführungsbeispiel, inklusive des Evakuierens des Hohlraums 33 vor dem Einfüllen des Lebensmittels 14 über den Füllschieber 8. Fig. 9 zeigt die Vorrichtung 1 in einem Zustand, in dem das Erwärmen des Lebensmittels 14 abgeschlossen und der Füllschieber 8 vollständig aus dem Formrohr 2 entfernt wurde. Fig. 10 zeigt das Ausführungsbeispiel nach Fig. 9 in einem zweiten Zustand. Ausgehend von dem in Fig. 9 gezeigten Zustand ist das Luftventil 22 geöffnet worden und über das Wegeventil 38 mit der Druckluftquelle 37 bzw. der Umgebungsluft unter Normaldruck verbunden worden. Über das Luftventil 22 in der zweiten Kappe 18 wird folglich Luft bzw. Druckluft in den Hohlraum 33 geleitet.

Wie in Fig. 11 gezeigt, sorgt die Druckluft für ein Ausschleusen oder Ausstoßen des erwärmten Lebensmittels 14 nach rechts aus dem Formrohr 2 hinaus. Die zweite Kappe 18 bzw. deren Kappenkörper 19 dienen dabei als Gegenlager, da sie ortsfest mit dem Formrohr 2 verbunden sind. Die Druckluft kann gleichzeitig eine Reinigungswirkung auf die Innenwand 5 des Innenraums 4 haben.

Ausgehend von den dargestellten und geschilderten Ausführungsbeispielen können die erfindungsgemäße Vorrichtung und das erfindungsgemäße Verfahren in vielfacher Weise abgewandelt werden. Beispielsweise ist es im zweiten Ausführungsbeispiel denkbar, dass auf die Druckluftquelle 37 und das Wegeventil 38 verzichtet werden kann, wenn bereits ein Belüften des Hohlraums 33 über das Luftventil 22 mit Normaldruck ausreicht, um das Lebensmittel 14 - wie in Fig. 11 gezeigt - aus dem Formrohr 2 auszuschleusen. Das Luftventil 22 kann, muss aber nicht einstückig mit dem Kappenkörper 19 ausgebildet sein. Es könnte beispielsweise auch benachbart zur Kappe 18 in der Wand des Formrohrs 2 angeordnet sein. Bei höheren Temperaturen oder längeren Behandlungsdauern könnten auch Objekte im Hohlraum 33 sterilisiert werden.

## Patentansprüche

1. Vorrichtung (1) zum Erwärmen eines Lebensmittels (14), umfassend
- ein Formrohr (2) aus einem elektrisch nicht leitfähigen Material,
- einen im Formrohr (2) beweglich geführten Füllschieber (8),
- eine erste, dem Füllschieber (8) zugeordnete Kappe (15),
- eine zweite Kappe (18),
- wobei die erste und die zweite Kappe (15, 18) jeweils einander zugewandte, einen Hohlraum (33) zwischen sich begrenzende, konkave Oberflächen (16, 21) aufweisen,
- wobei dem Hohlraum (33) über den Füllschieber (8) das Lebensmittel (14) zuführbar ist, und
- wobei die Vorrichtung (1) eine Heizeinrichtung (27) aufweist, die dazu konfiguriert ist, das im Hohlraum (33) befindliche Lebensmittel (14) zu erwärmen,
wobei die Vorrichtung (1) an der zweiten Kappe (18) ein Luftventil (22) aufweist.

2. Vorrichtung nach Anspruch 1, wobei über das Luftventil (22) der zwischen den Kappen (15, 18) gebildete Hohlraum (33) evakuierbar ist.

3. Vorrichtung nach einem der vorangehenden Ansprüche, wobei über das Luftventil (22) dem zwischen den Kappen (15, 18) gebildeten Hohlraum (33) Luft unter Normaldruck oder Druckluft zuführbar ist.

4. Vorrichtung nach einem der vorangehenden Ansprüche, wobei das Luftventil (22) als Kegelventil ausgebildet ist.

5. Vorrichtung nach einem der vorangehenden Ansprüche, wobei das Luftventil (22) einstückig mit der zweiten Kappe (18) ausgebildet ist.

6. Vorrichtung nach einem der vorangehenden Ansprüche, wobei die zweite Kappe (18) ortsfest bezüglich des Formrohrs (2) angeordnet ist.

7. Vorrichtung nach einem der vorangehenden Ansprüche, wobei der Füllschieber (8) vollständig aus dem Formrohr (2) herausführbar ist, wobei der Füllschieber (8) vorzugsweise ein absperrbares Einfüllventil (11) aufweist.

8. Vorrichtung nach einem der vorangehenden Ansprüche, wobei die erste und die zweite Kappe (15, 18) jeweils als Elektroden ausgebildet sind und die Heizeinrichtung (27) dazu konfiguriert ist, zwischen der ersten und der zweiten Elektrode (15, 18) eine elektrische Spannung anzulegen.

9. Verfahren zum Erwärmen eines Lebensmittels (14), wobei über einen in einem Formrohr (2) beweglich geführten Füllschieber (8) ein Lebensmittel (14) in einen Hohlraum (33) gefüllt wird, der von einer ersten und einer zweiten, jeweils einander zugewandte konkave Oberflächen (16, 21) aufweisenden Kappen (15, 18) begrenzt ist, und wobei nach dem Einfüllen des Lebensmittels (14) in den Hohlraum (33) das im Hohlraum (33) befindliche Lebensmittel (14) mittels einer Heizeinrichtung (27) zumindest lokal erwärmt wird, wobei der Hohlraum (33) vor dem Einfüllen des Lebensmittelns (14) in den Hohlraum (33) über ein Luftventil (22) evakuiert wird.

10. Verfahren nach Anspruch 9, wobei der Füllschieber (8) während des Befüllens des Hohlraums (33) mit dem Lebensmittel (13) in dem Formrohr (2) verschoben wird, vorzugsweise zumindest unterstützt durch einen Fülldruck des den Hohlraum (33) füllenden Lebensmittels (14).

11. Verfahren nach einem der Ansprüche 9 oder 10, wobei ein Fülldruck des den Hohlraum (33) füllenden Lebensmittels (14) mindestens 10 bar beträgt, vorzugsweise mindestens 15 bar, weiter bevorzugt 15 bis 25 bar.

12. Verfahren nach einem der Ansprüche 9 bis 11, wobei der Füllschieber (8) für ein Ausschleusen des Lebensmittels (14) aus dem Formrohr (2) vollständig aus dem Formrohr (2) herausbewegt wird.

13. Verfahren nach einem der Ansprüche 9 bis 12, wobei ein Ausschleusen des Lebensmittels (14) aus dem Formrohr (2) durch oder unterstützt durch Zufuhr von Druckluft in den Hohlraum (33) erfolgt, wobei vorzugsweise die Druckluft dem Hohlraum (33) über das zum Evakuieren verwendete Luftventil (22) zugeführt wird.

14. Verfahren nach einem der Ansprüche 9 bis 13, wobei die erste und die zweite Kappe (15, 18) jeweils als Elektroden ausgebildet sind und dass ein elektrischer Strom durch das Lebensmittel (14) erzeugt wird, indem zwischen der ersten und der zweiten Elektrode (15, 18) eine elektrische Spannung angelegt wird.

15. Verfahren nach einem der Ansprüche 9 bis 14, wobei eine Spannzange (26) vorgesehen ist und den Füllschieber (8) zumindest temporär während des Erwärmens des Lebensmittels (14) fixiert.

## Claims

1. An apparatus (1) for heating food (14), comprising
- a forming tube (2) made of an electrically non-conductive material,
- a filling slider (8) movably guided in the forming tube (2),
- a first cap (15) associated with the filling slider (8),
- a second cap (18),
- wherein the first and second caps (15, 18) each have concave surfaces (16, 21) facing each other and defining a cavity (33) therebetween,
- wherein the food (14) can be supplied to the cavity (33) via the filling slider (8), and
- wherein the apparatus (1) includes a heating device (27) configured to heat the food (14) located in the cavity (33), and
wherein the apparatus (1) includes an air valve (22) on the second cap (18).

2. The apparatus according to claim 1, wherein
the cavity (33) formed between the caps (15, 18) can be evacuated via the air valve (22).

3. The apparatus according to any one of the preceding claims, wherein
air under normal pressure or compressed air can be supplied to the cavity (33) formed between the caps (15, 18) via the air valve (22).

4. The apparatus according to any one of the preceding claims, wherein
the air valve (22) is configured as a cone valve.

5. The apparatus according to any one of the preceding claims, wherein
the air valve (22) is formed integrally with the second cap (18).

6. The apparatus according to any one of the preceding claims, wherein
the second cap (18) is arranged stationarily relative to the forming tube (2).

7. The apparatus according to any one of the preceding claims, wherein
the filling slider (8) can be guided completely out of the forming tube (2), the filling slider (8) preferably including a closable filling valve (11).

8. The apparatus according to any one of the preceding claims, wherein
the first and second caps (15, 18) are each formed as electrodes and the heating device (27) is configured to apply an voltage between the first and second electrodes (15, 18).

9. A method for heating food (14), wherein by means of a filling slider (8) movably guided in a forming tube (2) food (14) is filled into a cavity (33) which is defined by first and second caps (15, 18) each having concave surfaces (16, 21) facing each other, and wherein, after the food (14) has been filled into the cavity (33), the food (14) located in the cavity (33) is at least locally heated by means of a heating device (27), wherein
the cavity (33) is evacuated via an air valve (22) before filling the foodstuff (14) into the cavity (33).

10. The method according to claim 9, wherein the filling slider (8) is displaced in the forming tube (2) during the filling of the cavity (33) with the food (13), preferably at least assisted by a filling pressure of the food (14) filling the cavity (33).

11. The method according to any one of claims 9 or 10, wherein
a filling pressure of the food (14) filling the cavity (33) is at least 10 bar, preferably at least 15 bar, more preferably 15 to 25 bar.

12. The method according to any one of claims 9 to 11, wherein
the filling slider (8) is moved completely out of the forming tube (2) to discharge the food (14) from the forming tube (2).

13. The method according to any one of claims 9 to 12, wherein
the food (14) is discharged from the forming tube (2) by or assisted by the supply of compressed air into the cavity (33) and preferably the compressed air is supplied to the cavity (33) via the air valve (22) used for evacuation.

14. The method according to any one of claims 9 to 13, wherein
the first and second caps (15, 18) are each configured as electrodes and an electric current is generated through the food (14) by applying a voltage between the first and second electrodes (15, 18).

15. The method according to any one of claims 9 to 14, wherein
a collet (26) is provided for fixing the filling slider (8) at least temporarily while the food (14) is being heated.

## Revendications

1. Dispositif (1) pour chauffer un produit alimentaire (14), comprenant
- un tube de formage (2) en un matériau non conducteur de l'électricité,
- un poussoir de remplissage (8) guidé de manière mobile dans le tube de formage (2),
- un premier capuchon (15) associé au poussoir de remplissage (8),
- un deuxième capuchon (18),
- dans lequel les premier et deuxième capuchon (15, 18) ont chacun des surfaces concaves (16, 21) tournées l'une vers l'autre et délimitant entre elles une cavité (33),
- le produit alimentaire (14) pouvant être amené à la cavité (33) par le biais du poussoir de remplissage (8), et
- dans lequel le dispositif (1) comprend un dispositif de chauffage (27) configuré pour chauffer le produit alimentaire (14) situé dans la cavité (33),
dans lequel le dispositif (1) comprend une vanne d'air (22) sur le second capuchon (18).

2. Dispositif selon la revendication 1, dans lequel l'espace creux (33) formé entre les capuchons (15, 18) peut être évacué par la vanne d'air (22).

3. Dispositif selon l'une des revendications précédentes, dans lequel de l'air sous pression normale ou de l'air comprimé peut être amené à la cavité (33) formée entre les capuchons (15, 18) par l'intermédiaire de la vanne d'air (22).

4. Dispositif selon l'une des revendications précédentes, dans lequel la vanne d'air (22) est une vanne à clapet.

5. Dispositif selon l'une quelconque des revendications précédentes, dans lequel la vanne d'air (22) est formée d'un seul tenant avec le deuxième capuchon (18).

6. Dispositif selon l'une quelconque des revendications précédentes, dans lequel le deuxième capuchon (18) est fixe par rapport au tube de formage (2) .

7. Dispositif selon l'une des revendications précédentes, dans lequel le poussoir de remplissage (8) peut être entièrement sorti du tube de moulage (2), le poussoir de remplissage (8) présentant de préférence une vanne de remplissage (11) pouvant être bloquée.

8. Dispositif selon l'une quelconque des revendications précédentes, dans lequel les premier et deuxième capuchon (15, 18) sont chacun formés comme des électrodes, et le moyen de chauffage (27) est configuré pour appliquer une tension électrique entre les première et deuxième électrode (15, 18).

9. Procédé de chauffage d'un produit alimentaire (14), dans lequel un produit alimentaire (14) est rempli, par l'intermédiaire d'un poussoir de remplissage (8) guidé de manière mobile dans un tube de formage (2), dans une cavité (33) qui est délimitée par un premier et un deuxième capuchon (15, 18) présentant chacun des surfaces concaves (16, 21) tournées l'une vers l'autre, et dans lequel, après le remplissage du produit alimentaire (14) dans la cavité (33), le produit alimentaire (14) se trouvant dans la cavité (33) est chauffé au moins localement au moyen d'un dispositif de chauffage (27),
dans lequel la cavité (33) est mise sous vide par l'intermédiaire d'une vanne d'air (22) avant le remplissage du produit alimentaire (14) dans la cavité (33).

10. Procédé selon la revendication 9, dans lequel le poussoir de remplissage (8) est déplacé dans le tube de formage (2) pendant le remplissage de la cavité (33) avec l'aliment (13), de préférence au moins assisté par une pression de remplissage du produit alimentaire (14) remplissant la cavité (33).

11. Procédé selon l'une des revendications 9 ou 10, dans lequel une pression de remplissage du produit alimentaire (14) remplissant la cavité (33) est d'au moins 10 bars, de préférence d'au moins 15 bars, de préférence encore de 15 à 25 bars.

12. Procédé selon l'une quelconque des revendications 9 à 11, dans lequel le poussoir de remplissage (8) est déplacé complètement hors du tube de formage (2) pour une évacuation du produit alimentaire (14) hors du tube de formage (2).

13. Procédé selon l'une quelconque des revendications 9 à 12, dans lequel une évacuation du produit alimentaire (14) hors du tube de formage (2) est effectuée ou assistée par l'amenée d'air comprimé dans la cavité (33), l'air comprimé étant de préférence amené à la cavité (33) par l'intermédiaire de la vanne d'air (22) utilisée pour faire le vide.

14. Procédé selon l'une quelconque des revendications 9 à 13, dans lequel les premier et deuxième capuchon (15, 18) sont chacun formés comme des électrodes, et en ce qu'un courant électrique est généré à travers le produit alimentaire (14) en appliquant une tension électrique entre les première et deuxième électrode (15, 18) .

15. Procédé selon l'une des revendications 9 à 14, dans lequel une pince de serrage (26) est prévue et fixe le poussoir de remplissage (8) au moins temporairement pendant le chauffage du produit alimentaire (14).
